**Europäisches Patentamt**

**European Patent Office**

**Office européen des brevets**

(19)

(11) Veröffentlichungsnummer: **0 145 647**
A1

(12) # EUROPÄISCHE PATENTANMELDUNG

(21) Anmeldenummer: **84810229.9**

(22) Anmeldetag: **11.05.84**

(51) Int. Cl.⁴: **C 02 F 3/20**, C 02 F 3/12

(30) Priorität: **09.11.83 CH 6043/83**

(43) Veröffentlichungstag der Anmeldung: **19.06.85**
**Patentblatt 85/25**

(84) Benannte Vertragsstaaten: **AT BE CH DE FR GB IT LI LU NL SE**

(71) Anmelder: **Strässler AG., Schaffhauserstrasse 37, CH-8193 Eglisau (CH)**

(72) Erfinder: **Strässler, Karl, Gupfenweg 2, CH-8193 Eglisau (CH)**
Erfinder: **Zimmermann, Werner, Chüegass 7, CH-8193 Eglisau (CH)**

(74) Vertreter: **Justitz-Wormser, Daisy P., Dipl.-Chem. et al, PATENTANWALTS-BUREAU ISLER AG**
**Postfach 6940 Walchestrasse 23, CH-8023 Zürich (CH)**

(54) **Vorrichtung und Verfahren zum feinblasigen Belüften und/oder Durchmischen einer Flüssigkeit.**

(57) Die in einem Belüftungsbecken montierbare Vorrichtung besteht im wesentlichen aus mehreren Luftverteilern mit geringer Breite (1), die je mit einer Kupplung (5) an eine zentrale Luftverteilungsleitung (4) angeschlossen sind. Die Luftverteiler (1) bestehen aus einem schalenförmigen Wandteil (16) und einer luftdicht darauf befestigten Belüftungswand (2). Die aus dünnem Blech bestehende Belüftungswand (2) ist eben und besitzt eine grosse Anzahl Luftaustrittsöffnungen (7) mit einem Durchmesser kleiner als 0,3 mm und einer Tiefe von etwa 0,15 mm. Zum Belüften wird mit einem Gebläse Luft in die Leitung (4) und in die Luftverteiler (1) geleitet. Die Luft tritt als feine Luftblasen in schmalen Streifen aus den Öffnungen (7) und steigt langsam in der Flüssigkeit auf. Die Öffnungen (7) werden aufgrund ihrer geringen Tiefe durch kleine Sperrstoffe und Bakterien auch bei längerer Unterbrechung der Belüftung kaum verstopft. Die Belüftungsvorrichtung eignet sich insbesondere für eine intermittierende Belüftung in Abwässern oder Schlamm.

ACTORUM AG

Vorrichtung und Verfahren zum feinblasigen Belüften und/oder
Durchmischen einer Flüssigkeit

---

Die Erfindung betrifft eine Vorrichtung nach dem Oberbegriff
des unabhängigen Patentanspruchs 1 und ein Verfahren zum Betrieb einer solchen Vorrichtung.

Derartige Vorrichtungen und Verfahren dienen dem Sauerstoffeintrag in Flüssigkeiten, z.B. Abwasser, Reinwasser oder
Schlamm und deren Durchmischung. Die für die aeroben Prozesse
erforderliche Menge Sauerstoff wird in feinen Luftblasen in
die zu behandelnde Flüssigkeit eingeblasen.

Um den Energieverbrauch niedrig zu halten, kann vorteilhafterweise intermittierend belüftet werden, d.h. die Luftzufuhr
wird in einem Teil der Vorrichtung periodisch ganz oder teilweise unterbrochen.

Bekannt sind Vorrichtungen aus porösem keramischem Material
oder aus porösem Kunststoff in Form von Rohren, Platten, Tellern oder Scheiben, die von Luft durchströmt werden und an
deren Oberflächen Luftblasen unterschiedlicher Grössen gebildet werden. Diese Vorrichtungen haben die Nachteile, dass sich die freigesetzten Blasen oft zusammenballen und sehr schnell nach oben steigen, so dass die Zeit für den Saustoffaustausch stark verkleinert wird. Bei diesen Belüftern können die Poren bei einer Verminderung der Luftmenge verstopfen, weshalb sie sich für die intermittierende Belüftung nicht eignen. Diese Belüfter erfordern eine aufwendige Herstellung, Befestigung und Abdichtung und sind deshalb teuer.

Es ist weiter durch die schweizerische Patentschrift 540'856 eine Einrichtung zum feinblasigen Belüften von Abwasser bekannt geworden, bei der eine mit Luftaustrittsöffnungen versehene Luftverteilerfolie über eine Dichtungsfläche gespannt ist. Wird Luft zwischen die Luftverteilerfolie und die Dichtungsfläche gepresst, so hebt sich die Folie von der Dichtungsfläche, so dass sich die Austrittsöffnungen dehnen und die Luft in das Wasser eintreten kann. Diese Einrichtung besitzt den Nachteil, dass bei unterschiedlichen Luftdrücken die Oeffnungen unterschiedlich gross sind und deshalb die Luftblasen nicht immer den optimalen Durchmesser besitzen. Weiter ist nachteilig, dass zum Reinigen die Luftverteilerfolien ausgebaut und eventuell durch neue ersetzt werden müssen.

Es ist deshalb Aufgabe der Erfindung, eine Vorrichtung der
eingangs genannten Gattung zu schaffen, die wenig verstopfungsanfällig ist, eine wirkungsvolle Belüftung und/oder
Durchmischung ermöglicht und sich auch für den intermittierenden Betrieb eignet. Es ist auch Aufgabe der Erfindung,
ein Verfahren zum Betrieb der Vorrichtung zu schaffen, das
eine Verminderung des Energieverbrauchs ermöglicht und dennoch wirksam arbeitet.

Diese Aufgabe wird erfindungsgemäss dadurch gelöst, dass die
Luftverteiler röhrenförmige Hohlkörper sind, die je aus einem
schalenförmigen Wandteil und wenigstens einer dicht schliessend darauf befestigten, im wesentlichen ebenen Belüftungswand mit einer grossen Anzahl Luftaustrittsöffnungen mit
einem Durchmesser kleiner als 0,3 mm besteht. Weitere vorteilhafte Ausbildungen ergeben sich aus den abhängigen Ansprüchen.

Die erfindungsgemässe Vorrichtung hat die Vorteile, dass das
Verwachsen oder Verstopfen der Luftaustrittsöffnungen durch
Schlamm oder Bakterien durch die kleine Länge der Luftaustrittsöffnungen weitgehend vermieden wird. Eventuelle Ablagerungen werden durch die mit vergleichsweise hoher Geschwindigkeit ausströmende Luft entfernt. Die Luftverteiler können in unterschiedlichen Grössen hergestellt und leicht montiert und ausgewechselt werden. Durch die Schrägstellung der Belüftungswände kann die Sedimentbildung weiter verringert werden. Die geringe Verstopfungsanfälligkeit ermöglicht einen intermittierenden Betrieb und ein Durchmischen eines Teils des Belüftungsbeckens bei sehr geringer Sauerstoffzufuhr bei Denitrifikation, ohne dass zusätzliche mechanische Vorrichtungen zum Durchmischen des Abwassers erforderlich sind.

In Flüssigkeiten mit faserförmigen Stoffen können die Luftverteiler auf einer Sohle befestigt werden. Dies hat den Vorteil, dass das Aufwickeln der Fasern am Luftverteiler weitgehend verhindert wird.

Ausführungsbeispiele der Erfindung werden nachfolgend anhand der Zeichnung näher erläutert. Es zeigen:

Fig. 1   eine Ansicht eines Luftverteilers,

Fig. 2   einen Querschnitt durch einen Luftverteiler entlang
         der Linie II - II der Fig. 1,

Fig. 3   eine schematische Darstellung einer Draufsicht auf
         eine in einem Abwasserbecken montierte Vorrichtung,

Fig. 4 bis Fig. 6   schematische Darstellungen des Verlaufs
                    der Belüftungsstärke in Funktion der Zeit,

Fig. 7   einen Querschnitt durch einen auf einer Sohle befestigten Luftverteiler, und

Fig. 8   einen Querschnitt durch ein weiteres Ausführungsbeispiel eines ebenfalls auf einer Sohle befestigten
         Luftverteilers.

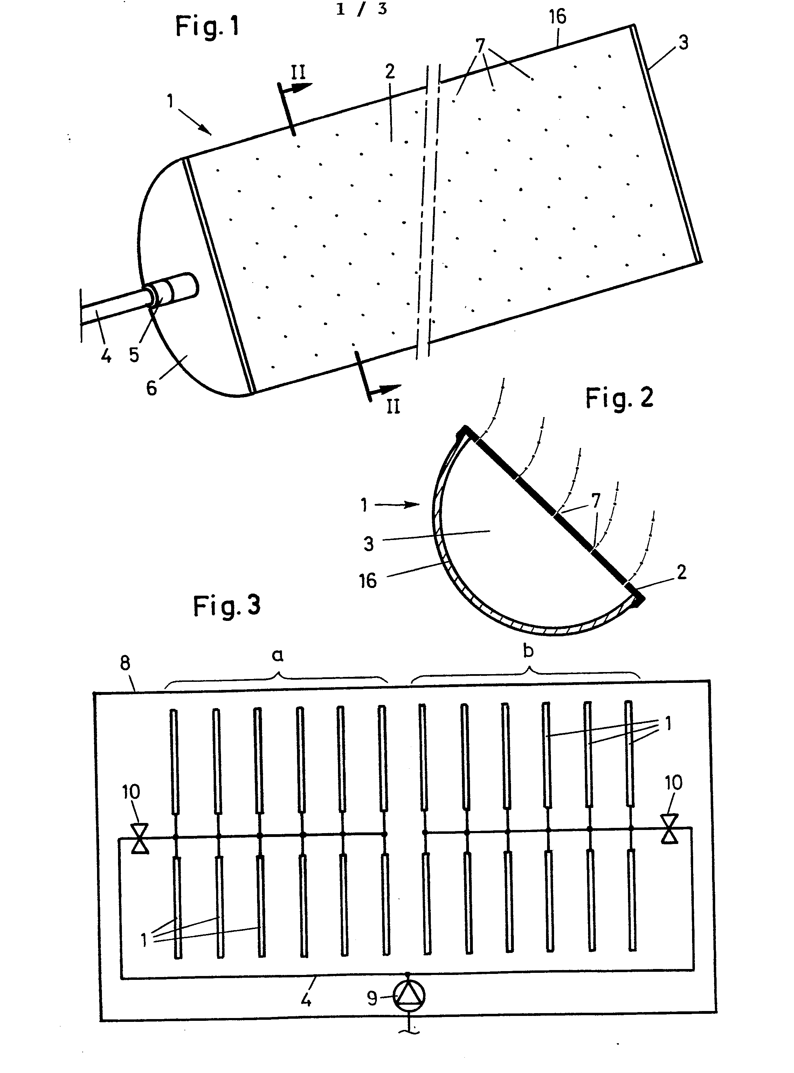

Wie die Fig. 1 und 2 deutlich zeigen, besteht ein Luftverteiler 1 aus einer ebenen Belüftungswand 2 aus dünnem Blech
oder Kunststoff, das auf einem halbschalenförmig, seitlich
mit Blenden 3 und 6 versehenen Wandteil 16 luftdicht befestigt ist. Die Belüftungswand 2 besitzt eine grosse Anzahl
kurzer Luftaustrittsöffnungen 7 mit einem Durchmesser zwischen 0,1 und etwa 0,3 mm, vorzugsweise zwischen etwa 0,12
und 0,15 mm. Die Belüftungswand 2 ist beispielsweise rechteckig, wobei die Länge mehrmals grösser ist als die Breite.
Mit der länglichen Form der Belüftungswand 2 bzw. des Luftverteilers 1 wird erreicht, dass die Luftblasen regelmässig
verteilt langsam und damit mit einer langen Verweildauer aufsteigen und eine sogenannte "Kaminwirkung" vermieden wird.
Eine "Kaminwirkung", d.h. ein schnelles Aufsteigen zusammengeballter Luftblasen wird besonders bei den tellerförmigen Keramikplatten beobachtet. Der Durchmesser der Luftaustrittsöffnungen 7 ist etwa so bemessen, dass Luftblasen mit einem
Durchmesser von etwa 2 mm entstehen. Die Luftaustrittsöffnungen 7 einer Belüftungswand 2 können auch unterschiedliche Durchmesser aufweisen, so dass aufgrund der unterschiedlichen Kapillarkräfte bei kleinen Luftmengen eine bessere
Luftverteilung erreicht wird. Die Belüftungswand 2 kann aus
rostfreiem Stahl oder einem geeigneten Kunststoff bestehen.
Der Luftverteiler 1 ist mit einer Verbindungskupplung, beispielsweise eine Steckkupplung 5, an eine Luftzuführungsleitung 4 anschliessbar. Die Belüftungswand 2 kann horizontal
als auch in Längs- oder Querrichtung geneigt ausgerichtet
sein. Durch eine leichte Neigung der Belüftungswand 2 wird
erreicht, dass in stark belasteten Abwässern die Sedimentbildung auf der Oberfläche der Belüftungswand 2 verringert
und eine bessere Luftverteilung bei kleinen Luftmengen erreicht wird.

Die Fig. 3 zeigt schematisch ein Becken 8, mit einer Belüftungsvorrichtung aus mehreren parallel und reihenförmig angeordneten Luftverteilern 1 mit geringer Breite, die an die
Luftzuführungsleitung 4 angeschlossen sind und denen mit
einem Gebläse 9 Luft zugeführt werden kann. Ventile 10 und 11
sowie hier nicht dargestellte Steuermittel erlauben die Reihen a und b mit unterschiedlichen Belüftungsstärken zu
betreiben. Die Anzahl, die Grössen und Formen der Luftverteiler 1 richten sich im wesentlichen nach der Grösse und
Form des Beckens und der erforderlichen Luftzufuhr.

Die in Fig. 3 dargestellte Anordnung der Luftverteiler 1 in
zwei Teilen a und b stellt lediglich ein Ausführungsbeispiel
dar. Um bei grossflächigen Belüftungsbecken 8 eine optimale
Belüftung zu erreichen, können auch mehrere Reihen von Luftverteilern 1 angeordnet werden, die in mehrere, mit unterschiedlichen Durchströmleistungen betreibbare Gruppen unterteilt sein können.

Bei einer Belüftung wird mit dem Gebläse 9 Luft komprimiert,
die über die Luftzuführungsleitung 4 in die Luftverteiler 1
strömt und diese als feine, langsam aufsteigende Luftblasen
mit einem Durchmesser von etwa 1 bis 3 mm verlässt. Bei der
nicht intermittierenden Belüftung wird die pro Zeiteinheit
ausströmende Luftmenge dem jeweiligen Sauerstoffbedarf angepasst.

Bei der intermittierenden Belüftung wird die pro Zeiteinheit
ausströmende Luftmenge zeitweise verringert oder ganz unterbrochen. Auch bei einer vollständigen Unterbrechung der Be-

lüftung wird im Innenraum 3 der Luftverteiler 1 ein Ueberdruck aufrecht erhalten. Da die Belüftungswand 2 sehr dünn
ist, besitzen die Oeffnungen eine geringe Tiefe, beispielsweise 0,15 mm. Wie Langzeitversuche gezeigt haben, werden
die Oeffnungen 7 auch bei einer Unterbrechung der Belüftung
von Bakterien bzw. geringen Sperrstoffen nicht verstopft.
Wird der Luftdruck im Innenraum 3 etwas erhöht, setzt die
Belüftung unmittelbar wieder ein.

Beim intermittierenden Belüften wird z.B. 200 Sekunden keine
oder nur wenig Luft zugeführt und stossweise, z.B. 5 Sekunden,
die Luftzufuhr verstärkt. Die Sauerstoffzufuhr ist sehr gering, die Durchmischung, beispielsweise des Belebtschlammes,
so gross, dass der Schlamm in Schwebe gehalten und der Denitrifikationsvorgang ablaufen kann.

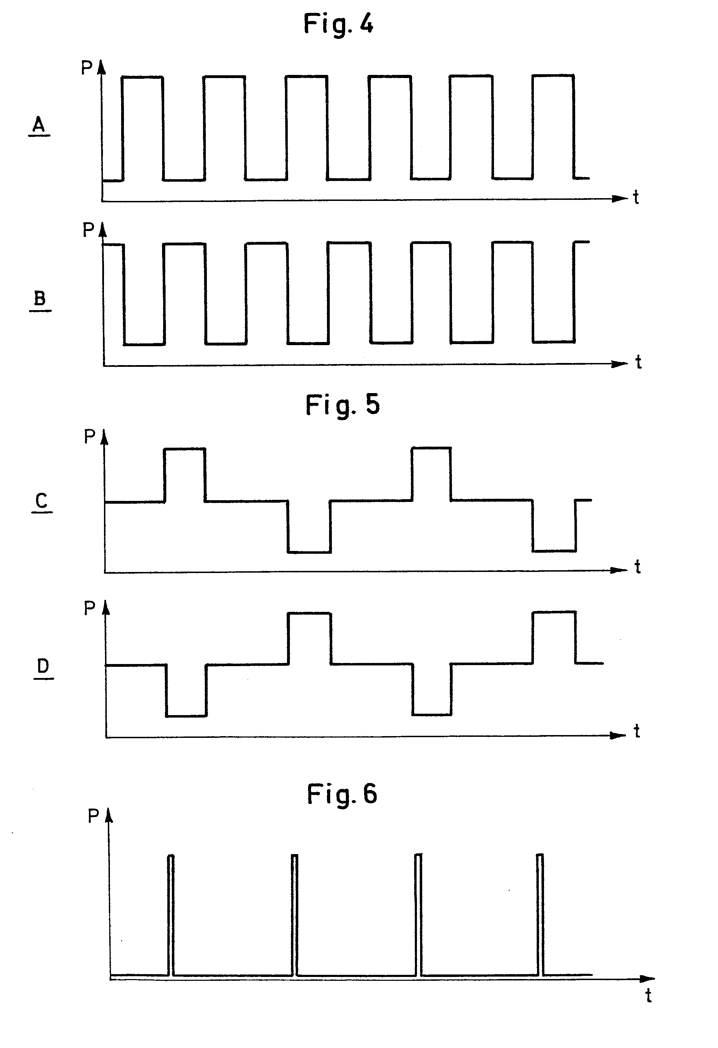

Die Fig. 4 zeigt beispielhaft den zeitlichen Ablauf der pro
Zeiteinheit ausströmenden Luftmenge bei einer in zwei Reihen
a und b unterteilten und intermittierend betriebenen Belüftungsvorrichtung. Die Kurve A bezieht sich auf die Reihe a
und die Kurve B auf die Reihe b. Beide Reihen a und b werden,
beispielsweise über zwei Schieber, so geschaltet, dass abwechslungsweise eine Reihe belüftet wird, während bei der anderen
Reihe die Belüftung stark verringert oder ganz unterbrochen
wird. Dieses Belüftungsverfahren besitzt vor allem bei geringer Luftzufuhr den Vorteil, dass der Energieverbrauch bei genügender Durchmischung gering bleibt. Bei dem in Fig. 5 dargestellten Belüftungsverfahren werden die beiden Reihen a und b zeitweise mit gleicher und zeitweise mit unterschiedlichen Belüftungsstärken betrieben.

Die Fig. 6 zeigt einen Belüftungsablauf, der in einem Teil eines Belüftungsbeckens, beispielsweise bei Denitrifikation, betrieben werden kann. In sich periodisch wiederholenden längeren Zeitintervallen wird keine oder nur wenig Luft zugeführt, in den Luftverteilern 1 jedoch ein kleiner Ueberdruck gehalten. Zwischen den längeren Zeitintervallen wird periodisch in kürzeren Zeitintervallen stossweise Luft zugeführt. Dadurch wird eine hinreichende Durchmischung bei geringer Sauerstoffzufuhr erreicht. Eine zusätzliche mechanische Durchmischungsvorrichtung ist somit nicht erforderlich.

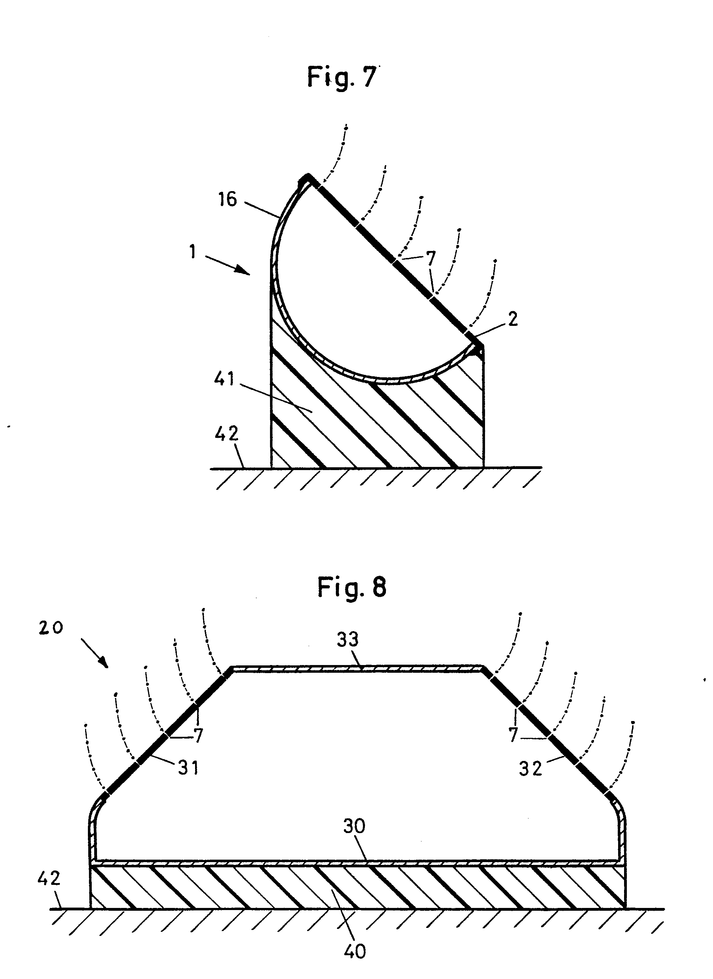

Die Fig. 7 zeigt einen Luftverteiler 1, der auf einer auf den Boden 42 eines Belüftungsbeckens gestellten Sohle 41 befestigt ist. Die Sohle 41 besteht beispielsweise aus Beton, Gummi oder Blech und verhindert das Aufwickeln von Fasern in Flüssigkeiten, wie beispielsweise Abwasser oder Schlamm, die stark mit fadenförmigen Stoffen belastet sind.

Die Fig. 8 zeigt ein weiteres Ausführungsbeispiel eines Luftverteilers 20, der aus einem schalenförmigen Wandteil 30 und
zwei seitlichen Belüftungswänden 31 und 32 sowie einer Deckwand 33 besteht. Der Luftverteiler 20 ist ebenfalls auf einer
Sohle 40 befestigt, kann jedoch auch schwebend angeordnet
sein.

Patentansprüche

1.        Vorrichtung zum feinblasigen Belüften und/oder Durchmischen einer Abwasserflüssigkeit, insbesondere Wasser, Abwasser oder Schlamm, bestehend aus mehreren unter dem Flüssigkeitsspiegel an eine Luftzuführungsleitung (4) angeschlossene, mit Luftaustrittsöffnungen (7) versehene Luftverteiler (1;20), dadurch gekennzeichnet, dass die Luftverteiler (1;20) röhrenförmige Hohlkörper sind, die je aus einem schalenförmigen Wandteil (16;30) und wenigstens einer dicht schliessend darauf befestigten, im wesentlichen ebenen Belüftungswand (2;31,22) mit einer grossen Anzahl Luftaustrittsöffnungen (7) mit einem Durchmesser kleiner als 0,3 mm bestehen.

2.        Vorrichtung nach Anspruch 1, dadurch gekennzeichnet, dass die Belüftungswand (2) rechteckig ist und die Breite vergleichsweise klein ist.

0145647

3.          Vorrichtung nach Anspruch 1 oder 2, dadurch gekennzeichnet, dass die Luftverteiler (1) einen halbkreisförmigen Querschnitt besitzen.

4.          Vorrichtung nach den Ansprüchen 1, 2 oder 3, dadurch gekennzeichnet, dass der Querschnitt ein Vieleck bildet.

5.          Vorrichtung nach einem der Ansprüche 1 bis 4, dadurch gekennzeichnet, dass die Belüftungswand (2;31,32) und/oder der schalenförmige Wandteil (16) aus Blech besteht.

6.          Vorrichtung nach Anspruch 5, dadurch gekennzeichnet, dass die Belüftungswand (2;31,32) aufgeschweisst ist.

7.          Vorrichtung nach einem der Ansprüche 1 bis 4, dadurch gekennzeichnet, dass die Belüftungswand (2;31,32) und/oder der schalenförmige Wandteil (16) aus Kunststoff besteht.

8.          Vorrichtung nach einem der Ansprüche 1 bis 7, dadurch gekennzeichnet, dass mindestens eine Anzahl der Belüftungswände (2;31,32) geneigt ist.

9.      Vorrichtung nach einem der Ansprüche 1 bis 8, dadurch gekennzeichnet, dass die Luftverteiler (1;20) in zwei oder mehrere Gruppen (a,b) unterteilt sind, derart, dass diese Gruppen (a,b) mit unterschiedlichen Belüftungsleistungen betrieben werden können.

10.      Vorrichtung nach einem der Ansprüche 1 bis 9, dadurch gekennzeichnet, dass die Luftverteiler (1) auf einer Sohle (40;41) befestigt sind.

11.      Verfahren zum Betrieb einer Vorrichtung nach einem der Ansprüche 1 bis 9, dadurch gekennzeichnet, dass bei mindestens einer Anzahl der Luftverteiler (1;20) die Luftzufuhr in die Flüssigkeit in mindestens einem Zeitintervall vermindert ist.

12.      Verfahren nach Anspruch 10, dadurch gekennzeichnet, dass die Luftzufuhr bei mindestens einer Anzahl der Luftverteiler (1) in mindestens einem Zeitintervall vollständig unterbrochen oder auf einen minimalen Wert verringert wird, und dass der Luftdruck im Innenraum (17) dieser Luftverteiler (1) in diesem Zeitintervall so gross ist, dass die Kapillarkräfte der Luftaustrittsöffnungen das Eindringen von Flüssigkeit verhindern.

0145647

13.       Verfahren nach Anspruch 10, dadurch gekennzeichnet, dass mit mindestens einer Anzahl der Luftverteiler (1;20) intermittierend belüftet wird.

14.       Verfahren nach Anspruch 10 oder 11, dadurch gekennzeichnet, dass in sich wiederholenden Zeitinvervallen bei einer Anzahl der Luftverteiler (a oder b) die Belüftung vermindert und bei den anderen Luftverteilern (b oder a) die Belüftung und die Turbulenz erhöht wird.

15.       Verfahren nach Anspruch 13, dadurch gekennzeichnet, dass die gesamte Belüftungsleistung aller Luftverteiler (1;20) konstant ist.

0145647

Fig.1

Fig. 2

Fig.3

## Fig. 4

A

B

## Fig. 5

C

D

## Fig. 6

**Fig. 7**

**Fig. 8**

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 131 158 (W. JONES)<br><br>* Seite 2, Zeile 28 - Seite 3, Zeile 27 * | 1-3,5, 9,11-15 | C 02 F 3/20<br>C 02 F 3/12 |
| Y | GB-A- 13 588 (T. HENDERSON) (A.D. 1904)<br>* Seite 2, Zeile 37 - Seite 3, Zeile 5 * | 1,2,4, 5,9 | |
| Y | CH-A- 461 389 (M. DANJES)<br>* Spalte 1, Zeile 24 - Spalte 2, Zeile 22; Spalte 3, Zeile 35 - Spalte 4, Zeile 32; Spalte 5, Zeilen 17-57 * | 1,4,12 | |
| X | DE-A-2 645 224 (S.J. HODGKISS et al.)<br>* Seiten 1-2, Ansprüche 1,8-11; Seite 5, letzter Absatz; Seite 8, Absatz 2 * | 9,11-15 | RECHERCHIERTE SACHGEBIETE (Int. Cl.4)<br><br>C 02 F |
| A | AIR DIFFUSION IN SEWAGE WORKS, 1952, Seite 27, Federation of Sewage and Industrial Wastes Associations, Champaign, Illinois, US;<br>* Seite 27, Figur 10(a) * | 8,10 | |
| A | DE-A- 813 995 (B. MÜLLER)<br>* Seite 2, Anspruch 2 * | 8 | |

---                                    -/-

Der vorliegende Recherchenbericht wurde für alle Patentansprüche erstellt.

| Recherchenort<br>DEN HAAG | Abschlußdatum der Recherche<br>14-02-1984 | Prüfer<br>TEPLY J. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

**EUROPÄISCHER RECHERCHENBERICHT**

Nummer der Anmeldung

EP 84 81 0229

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| P,A | EP-A-0 101 145 (NGK)<br>* Seite 14, Ansprüche 1,5 *<br><br>----- | 1 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 14-02-1984 | TEPLY J. |